# EUROPÄISCHE PATENTSCHRIFT

(11) **EP 3 729 137 B1**
(45) Veröffentlichungstag und Bekanntmachung des Hinweises auf die Patenterteilung: **20.09.2023**
(21) Anmeldenummer: 18826568.0
(22) Anmeldetag: 17.12.2018
(51) Int. Cl.: G01S 17/89, G01S 17/931, G01S 17/10, G01S 17/42, G01S 7/4863, G01S 7/4865, G01S 7/481

(54) **MULTIPULS-LIDARSYSTEM ZUR MEHRDIMENSIONALEN ERFASSUNG VON OBJEKTEN**
MULTI-PULSE LIDAR SYSTEM FOR MULTI-DIMENSIONAL DETECTION OF OBJECTS
SYSTÈME LIDAR À IMPULSIONS MULTIPLES POUR LA DÉTECTION MULTIDIMENSIONNELLE D'OBJETS

(30) Priorität: 18.12.2017 DE 102017223102
(43) Veröffentlichungstag der Anmeldung: 28.10.2020
(73) Patentinhaber: Robert Bosch GmbH, 70442 Stuttgart (DE)
(72) Erfinder: SCHNITZER, Reiner, 72762 Reutlingen (DE); HIPP, Tobias, 72379 Hechingen (DE)
(86) Internationale Anmeldenummer: PCT/EP2018/085099
(87) Internationale Veröffentlichungsnummer: WO 2019/121437

(56) Entgegenhaltungen:
- EP-A1- 2 708 914
- EP-A1- 3 318 895
- WO-A1-2017/132704
- DE-A1-102011 005 746
- US-A1- 2012 075 615

## Beschreibung

Die Erfindung betrifft ein Multipuls-Lidarsystem zur mehrdimensionalen Erfassung von Objekten in einem Beobachtungsbereich des Multipuls-Lidarsystems. Ferner betrifft die Erfindung ein Verfahren zur mehrdimensionalen Erfassung von Objekten in einem Beobachtungsbereich mithilfe eines entsprechenden Multipuls-Lidarsystems.

Lidarsysteme werden unter anderem zur Erfassung von Objekten in der Umgebung von Fahrzeugen verwendet. Ein solches Lidarsystem scannt seine Umgebung mithilfe einer gepulsten bzw. zeitlich modulierten Laserstrahlung ab, wobei die von einer Laserquelle des Lidarsystems emittierte Lichtstrahlung an Objekten in der Umgebung reflektiert beziehungsweise gestreut und mittels eines Detektors im Lidarsystem wieder empfangen wird. Beim Scannen wird der Laserstrahl dabei sukzessive entlang einer Scanrichtung bewegt, wobei die im betreffenden Beobachtungsbereich befindlichen Objekte erfasst werden. Die relative Position eines erfassten Objekts in Bezug auf das Fahrzeug wird dabei durch den entsprechenden Winkel des Laserstrahls und die mittels Laufzeitmessung der Einzellaserpulse ermittelte Entfernungsinformation ermittelt. Das Lidarsystem kann dabei in Form eines Singlepuls-Lidarsystems oder eines Multipuls-Lidarsystems ausgebildet sein. Ein Singlepuls-Lidarsystem tastet jeden Abtastpunkt mittels jeweils eines Einzellaserpulses ab. Hierdurch lässt sich eine besonders hohe laterale Auflösung erreichen. Allerdings erfordert das System Einzellaserpulse mit einer relativ hohen Laserleistung, weshalb eine entsprechend leistungsfähige Laserquelle benötigt wird. Mit einer deutlich geringeren Laserleistung kommt hingegen das Multipuls-Lidarsystem, bei dem ein Abtastpunkt mittels mehrerer kurz hinter einander folgender Einzellaserpulse geringerer Leistung abgetastet wird. Durch Aufssummieren der Einzelmessungen ergibt sich ein geeignetes Detektorsignal mit einem ausreichenden Signal-Rausch-Verhältnis. Nachteilig bei diesem Verfahren ist jedoch eine Reduktion der lateralen Auflösung, welche durch das Aufssummieren der Einzelmessungen über einen relativ großen Winkelbereich und ein damit einhergehendes Verschmieren des Detektorsignals bedingt ist.

Aus der Druckschrift EP 2 708 914 A1 sind ein optoelektronischer Sensor und ein Verfahren zur Erfassung einer Tiefenkarte bekannt. Aus der Druckschrift DE 10 2011 005 746 A1 ist eine Messvorrichtung zur mehrdimensionalen Vermessung eines Zielobjekts bekannt. Beide Druckschriften offenbaren jeweils die Verwendung von Empfangseinrichtungen mit einer Mehrzahl von Pixeln. Die Druckschrift EP 3 318 895 A1, die Stand der Technik gemäß Artikel 54(3) bildet, offenbart ein Verfahren zum Empfangen eines reflektierten Lichtpulses in einem LidarSystem. Eine Auswahlschaltung ist dazu eingerichtet, einige der Sensorelemente auszuwählen und zu einem Makropixel zusammenzufassen. Dies bedeutet, dass eine flexible Auswahl erfolgt, welche der Sensorelemente zu dem Makropixel zusammengefasst werden.

Es ist daher Aufgabe der Erfindung eine laserbasierte Detektionsmethode für Objekte bereitzustellen, welche nach dem Prinzip eines Multipuls-Lidarsystems arbeitet und daher mit einer relativ geringen Laserleistung auskommt und gleichzeitig eine relativ hohe laterale Auflösung ermöglicht. Diese Aufgabe wird durch ein Multipuls-Lidarsystem nach Anspruch 1 gelöst. Ferner wird die Aufgabe durch ein Verfahren gemäß Anspruch 6 gelöst. Weitere vorteilhafte Ausführungsformen sind in den abhängigen Ansprüchen angegeben.

Gemäß der Erfindung ist ein Multipuls-Lidarsystem zur Erfassung von Objekten in einem Beobachtungsbereich vorgesehen. Das Lidarsystem umfasst dabei eine Sendeeinrichtung mit wenigstens einer Laserquelle zum Erzeugen eines Sendelaserstrahls aus einer zeitlichen Abfolge von Einzellaserpulsen, welche jeweils einen auf einen Teil des Beobachtungsbereichs begrenzten Erfassungsbereich beleuchten und in wenigstens einem Abtastpunkt abtasten. Ferner umfasst das Lidarsystem eine Empfangseinrichtung mit einer Detektionsfläche umfassend eine zeilen- oder matrixförmige Subdetektoranordnung aus mehreren in einer ersten Erstreckungsrichtung nebeneinander angeordneten Subdetektoren zum Empfangen des an Objekten im Beobachtungsbereich des Multipuls-Lidarsystems reflektieren und/oder gestreuten Sendelaserstrahls in Form eines Empfangslaserstrahls. Die Empfangseinrichtung ist dabei ausgebildet, einen vom Sendelaserstrahl erfassten Abtastpunkt auf der Detektionsfläche in Form eines Bildpunkts abzubilden. Ferner umfasst das Lidarsystem eine Scaneinrichtung zum Erzeugen einer Scanbewegung des Sendelaserstrahls in einer Scanrichtung zu einer sukzessiven Abtastung des gesamten Beobachtungsbereichs entlang mehrerer in der Scanrichtung aufeinanderfolgender Abtastpunkte. Dabei ist die Scanbewegung des Sendelaserstrahls ausgebildet ist, einen Bildpunkt bei zeitlich nacheinander folgenden Einzellaserpulsen jeweils entlang der zeilen- oder matrixförmigen Subdetektoranordnung verschoben auf der Detektionsfläche abzubilden. Schließlich umfasst das Lidarsystem eine Steuereinrichtung zum Bestimmen von Entfernungsinformationen der Abtastpunkte anhand von Laufzeiten der jeweiligen Einzellaserpulse, wobei die Steuereinrichtung ausgebildet ist, Subdetektoren, welche von einem auf der Detektionsfläche aktuell abgebildeten Bildpunkt erfasst werden, gemeinsam in Form eines dem jeweiligen Bildpunkt individuell zugeordneten Makro-Pixels auszuwerten. Durch die Möglichkeit Subdetektoren individuell einem Makro-Pixel zuzuordnen, kann die Position des jeweiligen Makro-Pixels optimal an die Position des die Abbildung des jeweiligen Abtastpunktes auf der Detektionsfläche repräsentierenden Bildpunkts angepasst werden. Somit kann die Messenergie des jeweiligen Abtastpunktes optimal genutzt werden.

In einer Ausführungsform der Erfindung ist dabei vorgesehen, dass die Steuereinrichtung ferner ausgebildet ist, die Position eines Makro-Pixels auf der Detektionsfläche durch Umgruppieren entsprechender Subdetektoren der durch die Scanbewegung verursachten Verschiebung des dem jeweiligen Makro-Pixel zugeordneten Bildpunkts auf der Detektionsfläche folgend anzupassen. Hierdurch kann die Messenergie und Messzeit des jeweiligen Abtastpunktes über mehrere Einzelmessungen hinweg optimal genutzt werden.

In einer weiteren Ausführungsform ist vorgesehen, dass die Sendeeinrichtung ausgebildet ist einen Sendelaserstrahl zu erzeugen, dessen Einzellaserpulse jeweils einen Raumwinkel mit wenigstens zwei Abtastpunkten beleuchten. Die Empfangseinrichtung ist dabei ausgebildet, die beiden Abtastpunkte in dem von dem Sendelaserstrahl aktuell beleuchteten Abtastbereich in Form von zwei auf der Detektionsfläche nebeneinander angeordneten und sich infolge der Scanbewegung entlang der zeilen- oder matrixförmigen Subdetektoranordnung verschiebenden Bildpunkte darzustellen. Ferner ist die Steuereinrichtung ausgebildet, Subdetektoren, welche aktuell von einem ersten Bildpunkt der beiden Bildpunkte erfasst werden, gemeinsam zu einem dem ersten Bildpunkt zugeordneten ersten Makro-Pixel zu gruppieren und Subdetektoren, welche aktuell von einem zweiten Bildpunkt der beiden Bildpunkte erfasst werden, gemeinsam zu einem dem zweiten Bildpunkt zugeordneten zweiten Makro-Pixel zu gruppieren. Durch die gemeinsame Abtastung mehrerer Abtastpunkte wird die Messzeit für jeden der beiden Abtastpunkte erhöht. Somit steht für jede Abtastung mehr Messenergie zur Verfügung, wodurch sich das Signal-Rausch Verhältnis verbessert.

Gemäß einer weiteren Ausführungsform ist die Steuereinrichtung (130) ausgebildet, Subdetektoren, welche bei einer mittels eines ersten Einzellaserpulses erfolgenden ersten Einzelmessung von dem ersten Bildpunkt und bei einer mittels eines dem ersten Einzellaserpuls zeitlich unmittelbar nachfolgenden zweiten Einzellaserpulses erfolgenden zweiten Einzelmessung von dem zweiten Bildpunkt erfasst werden, bei der ersten Einzelmessung dem ersten Makro-Pixel und bei der nachfolgenden zweiten Einzelmessung dem zweiten Makro-Pixel zuzuordnen. Hierdurch wird die Detektionsfläche optimal genutzt.

In einer weiteren Ausführungsform ist vorgesehen, dass die Sendeeinrichtung mehrere Laserquellen umfasst, deren Erfassungsbereiche orthogonal zur Scanrichtung untereinander angeordnet sind. Dabei umfasst die Detektionsfläche für jede Laserquelle eine der jeweiligen Laserquelle individuell zugeordnete Subdetektoranordnung, wobei die Subdetektoranordnungen orthogonal zur Scanrichtung untereinander angeordnet sind. Hierdurch kann die vertikale Auflösung des Lidarsystems erhöht werden.

Gemäß der Erfindung ist ferner ein Verfahren zur mehrdimensionalen Erfassung von Objekten in einem Beobachtungsbereich mithilfe eines Multipuls-Lidarsystems vorgesehen. Dabei wird in einem ersten Verfahren Schritt Sendelaserstrahl in Form einer zeitlichen Abfolge von Einzellaserpulsen erzeugt, wobei der Sendelaserstrahl mit jedem Einzellaserpuls einen auf einen Teilabschnitt des Beobachtungsbereichs begrenzten Erfassungsbereich beleuchtet und dabei in wenigstens einem Abtastpunkt abtastet. Anschließend wird eine Scanbewegung des Sendelaserstrahls in einer Scanrichtung erzeugt, welche eine sukzessive Abtastung des gesamten Beobachtungsbereichs in mehreren in der Scanrichtung aufeinanderfolgenden Abtastpunkten bewirkt. Anschließend wird ein durch Reflexion und/oder Streuung des Sendelaserstrahls an Objekten im Beobachtungsbereich erzeugter Empfangslaserstrahl auf einer Detektionsfläche mit einer zeilen- oder matrixförmigen Subdetektoranordnung aus mehreren in einer ersten Erstreckungsrichtung nebeneinander angeordneten Subdetektoren empfangen, wobei ein vom Sendelaserstrahl aktuell erfasster Abtastpunkt auf der Detektionsfläche in Form eines sich infolge der Scanbewegung des Sendelaserstrahls sukzessiv entlang der zeilen- oder matrixförmigen Subdetektoranordnung verschiebenden Bildpunkts abgebildet wird. Anschließend werden Subdetektoren, deren Positionen der aktuellen Position des Bildpunkts entsprechen, zu einem dem jeweiligen Bildpunkt individuell zugeordneten Makro-Pixel gruppiert. Schließlich werden die dem jeweiligen Makro-Pixel zugeordnete Subdetektoren gemeinsam ausgewertet. Durch die Möglichkeit Subdetektoren individuell zu einem Makro-Pixel zu gruppieren, kann die Position des jeweiligen Makro-Pixels optimal an die Position des die Abbildung des jeweiligen Abtastpunktes auf der Detektionsfläche repräsentierenden Bildpunkts angepasst werden. Somit kann die Messenergie des jeweiligen Abtastpunktes optimal genutzt werden.

In einer Ausführungsform ist vorgesehen, dass die bei mehreren Einzelmessungen für ein bestimmtes Makro-Pixel gemessenen Signale der in diesen Einzelmessungen dem jeweiligen Makro-Pixel zugeordneten Subdetektoren gemeinsam einem dem jeweiligen Makro-Pixel zugeordneten Histogramm zugeordnet werden. Hierdurch wird die Messzeit aus den Einzelmessungen gemeinsam ausgewertet, was insbesondere zu einem besseren Signal-Rausch Verhältnis führt.

In einer weiteren Ausführungsform ist vorgesehen, dass die Position eines Makro-Pixels auf der Detektionsfläche durch Umgruppieren entsprechender Subdetektoren einer durch die Scanbewegung verursachten Verschiebung des dem jeweiligen Makro-Pixel zugeordneten Bildpunkts auf der Detektionsfläche folgend sukzessiv angepasst wird. Hierdurch kann die Messenergie und Messzeit des jeweiligen Abtastpunktes über mehrere Einzelmessungen hinweg optimal genutzt werden.

In einer weiteren Ausführungsform ist vorgesehen, dass während einer Einzelmessung gleichzeitig mehrere Abtastpunkte erfasst werden, wobei Subdetektoren, welche dabei von einem ersten Abtastpunkt auf der Detektionsfläche erzeugten ersten Bildpunkt erfasst werden, einem dem ersten Abtastpunkt individuell zugeordneten ersten Makro-Pixel zugeordnet werden. Ferner werden Subdetektoren, welche dabei von einem zweiten Abtastpunkt auf der Detektionsfläche gebildeten zweiten Bildpunkt erfasst werden, einem dem zweiten Abtastpunkt individuell zugeordneten zweiten Makro-Pixel zugeordnet. Durch die gemeinsame Abtastung mehrerer Abtastpunkte wird die Messzeit für jeden der beiden Abtastpunkte erhöht. Somit steht für jede Abtastung mehr Messenergie zur Verfügung, wodurch sich das Signal-Rausch Verhältnis verbessert.

Schließlich ist in einer weiteren Ausführungsform vorgesehen, dass Subdetektoren, welche während einer ersten Einzelmessung von dem ersten Bildpunkt und bei einer mittels eines dem ersten Einzellaserpuls zeitlich unmittelbar nachfolgenden zweiten Einzellaserpulses erfolgenden zweiten Einzelmessung von dem zweiten Bildpunkt erfasst werden, bei der ersten Einzelmessung dem ersten Makro-Pixel und bei der nachfolgenden zweiten Einzelmessung dem zweiten Makro-Pixel zugeordnet werden. Hierdurch wird eine besonders optimale Nutzung der Detektionsfläche ermöglicht, welche darüber hinaus eine besonders flexible Messung zulässt.

Im Folgenden wird die Erfindung anhand von Figuren näher beschrieben. Dabei zeigen
Fig. 1 schematisch eine perspektivische Darstellung des Multipuls-Lidarsystems zur Verdeutlichung der Rotationsbewegung zum Scannen des Beobachtungsbereichs;
Fig. 2 eine schematische Darstellung eines rotierenden Lidarsystems beim Scannen eines in seinem Beobachtungsbereich angeordneten Fahrzeuges;
Fig. 3 bis 5 schematische Darstellungen des erfindungsgemäßen Lidarsystems zur Verdeutlichung des Abtastvorgangs eines Objektes mittels dreier aufeinander folgender Einzellaserpulse;
Fig. 6 ein Diagramm zur Verdeutlichung der Verschiebung eines auf der Detektionsfläche abgebildeten Bildpunkts in Abhängigkeit von der Scanbewegung;
Fig. 7 bis 9 eine schematische Darstellung eines Abtastvorgangs eines Objekts zur Verdeutlichung der Zuordnung von Subdetektoren zu einzelnen Makro-Pixeln; und
Fig. 10 und 11 eine Variation des erfindungsgemäßen Lidarsystems aus den Figuren 7 bis 9, wobei gleichzeitig drei Abtastpunkte erfasst werden.

Kern der Erfindung ist es, ein Multipuls-Lidarsystem bzw. Makro-Scannersystem zu ermöglichen, welches trotz Verwendung mehrerer Pulse für eine Messung dieselbe laterale Auflösung erzielt, wie ein Einzelpuls-Lidarsystem. Da sich bei einem Multipuls-Lidarsystem zur Verbesserung der Messgenauigkeit oder bedingt durch den Einsatz spezieller Detektoren bzw. Messprinzipien (SPAD/TCSPC) eine Messung aus mehreren Einzelpulsen zusammensetzt, ist die Auflösung des Systems ohne eine geeignete Kompensation auf die Winkeldifferenz zwischen der Emission des ersten und des letzten Einzellaserpulses für die Messung limitiert.

Um diese Limitierung zu umgehen, wird zum Empfang der Messpulse anstelle eines einzelnen Detektors eine Zeile bzw. ein Array aus mehreren kleinen Detektoren bzw. Subdetektoren verwendet. Dabei lässt sich durch geeignetes Zusammenfassen bzw. Gruppieren der Subdetektoren zu Makro-Pixeln die Rotation- bzw. Scanbewegung kompensieren. Die Geschwindigkeit des Umgruppierens der Subdetektoren ergibt sich direkt aus der Rotationsgeschwindigkeit des Sensors. Das laterale Auflösungsvermögen eines solchen Aufbaus entspricht dann dem Auflösungsvermögen einer Einzelpuls-Lösung. Ferner geht durch das parallele Zuordnen der Einzellaserpulse zu benachbarten Makro-Pixeln keine Messenergie und Messzeit verloren.

Bei dem erfindungsgemäßen Lidarsystem wird zum Empfang einzelner Messpulse anstelle eines einzelnen Detektors eine Anordnung aus mehreren zeilen- oder matrixförmig angeordneten kleinen Detektoren verwendet. Durch geeignetes Zusammenfassen bzw. Umgruppieren dieser Subdetektoren zu größeren Makro-Pixeln wird die Rotationsbewegung des Sensorkopfes kompensiert Die Geschwindigkeit dieses Umgruppierens der Subdetektoren ergibt sich direkt aus der Rotationsgeschwindigkeit des Sensors. Das laterale Auflösungsvermögen eines solchen Aufbaus entspricht dabei einer Einzelpuls-Lösung. Ebenso geht durch paralleles Zuordnen der Pulse zu benachbarten Makro-Pixeln keine Messenergie und Messzeit verloren. Als Subdetektoren können Detektoren verwendet werden, welche nach verschiedenen Messprinzipien arbeiten, beispielsweise SPAD (single photon avalanche photodiode) oder TCSPC (time correlated single photon counting).

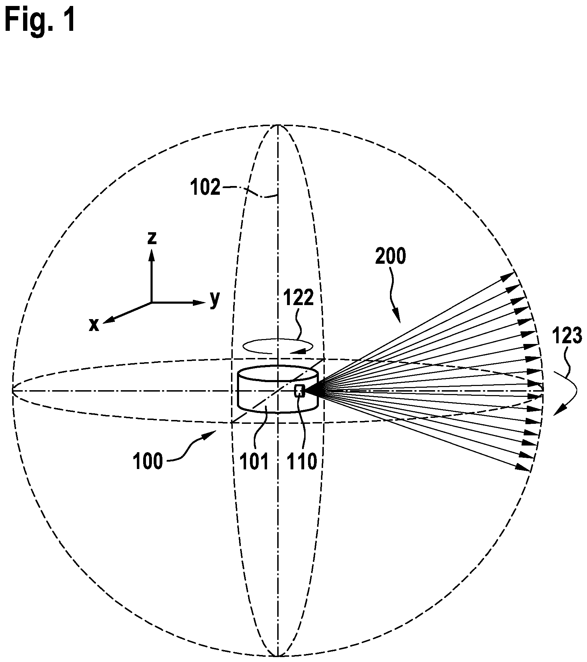

Die **Figur 1** zeigt ein Makro-Lidarsystem 100 mit einem rotierenden Sensorkopf 101, welcher über mehrere in unterschiedlichen Winkeln angeordnete Sende- und Empfangseinheiten verfügt, wobei im vorliegenden Beispiel lediglich die Sendeeinrichtung 110 dargestellt ist. Der Sensorkopf 101 führt dabei eine rotierende Scanbewegung 122 aus, wobei die Rotationsachse 102 im vorliegenden Beispiel parallel zur Z-Achse verläuft. Bei dieser Anordnung wird die horizontale Bildauflösung des Lidarsystems durch die Rotationsbewegung und die Messrate bestimmt. Hingegen wird die vertikale Bildauflösung durch die Anzahl und den jeweiligen Winkelabstand der Empfangseinheiten definiert. Der Sensorkopf 101 führt im vorliegenden Ausführungsbeispiel eine vollständige Drehung von 360° aus. Jede Ausführungsform kann die Scanbewegung jedoch auch auf einen definierten Winkelbereich eingeschränkt sein.

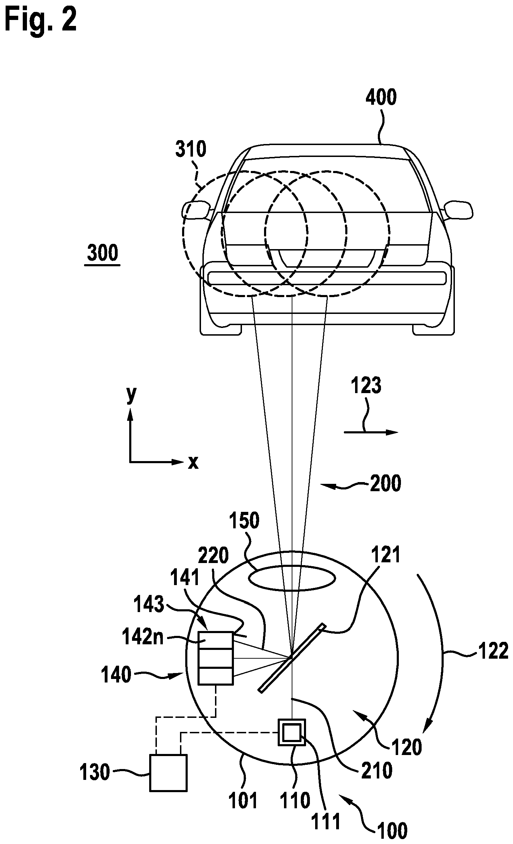

Die **Figur 2** zeigt eine schematische Darstellung des Makro-Lidarsystems 100 aus Figur 1 während eines Scanvorgangs, bei dem ein im Beobachtungsbereich 300 des Lidarsystems 100 angeordnetes Objekt 400 (im vorliegenden Fall ein Fahrzeug) mittels einer Laserstrahlung 200 abgetastet wird. Das Lidarsystem 100 weist einen rotierenden Sensorkopf 101 auf, welcher eine Sendeeinrichtung 110 mit wenigstens einer Laserquelle (111) sowie eine Empfangseinrichtung 140 mit einer Detektionsfläche 141 umfasst. Die Detektionsfläche 141 umfasst pro Laserquelle eine zeilen- oder matrixförmige Subdetektoranordnung 143 aus mehreren in einer ersten Erstreckungsrichtung 144 nebeneinander angeordneten Subdetektoren 142ₙ. Aus Gründen der Übersichtlichkeit ist in der Figur 2 lediglich eine zeilenförmige Subdetektoranordnung 143 mit lediglich drei Subdetektoren 142ₙ dargestellt.

Im vorliegenden Ausführungsbeispiel umfasst der Sensorkopf 101 ferner eine optische Abbildungseinrichtung 150. Hierbei kann es sich beispielsweise um ein oder mehrere optische Linsenelemente handeln, mit deren Hilfe die Laserstrahlen 210, 220 in gewünschter Weise geformt werden. Ferner kann der Sensorkopf 101, wie im vorliegenden Ausführungsbeispiel der Fall, einen Strahlenteiler 121 zum Überlagern bzw. Trennen der Sende- und Empfangslaserstrahlen 210, 220. Ein solcher optischer Strahlenteiler 121 kann beispielsweise in Form eines teildurchlässigen Spiegels ausgebildet sein.

Wie die Figur 2 ferner zeigt, umfasst das Lidarsystem 100 typischerweise auch eine Steuereinrichtung 130 zum Steuern der Sende- und Empfangseinrichtungen 110, 140. Die Steuereinrichtung 130 umfasst im vorliegenden Beispiel auch eine Messeinrichtung zum Ermitteln der Laufzeiten der emittierten und wieder empfangenen Einzellaserpulse sowie eine Auswerteeinrichtung zum Ermitteln von Entfernungsinformationen der Abtastpunkte anhand der gemessenen Laufzeiten. Je nach Ausführungsform kann die Steuereinrichtung 130 oder einzelne ihrer Komponenten außerhalb des Sensorskopfes 101 angeordnet und mittels entsprechender Signal- und Datenleitungen mit den jeweiligen Einrichtungen in dem Sensorkopf 101 verbunden sein. Alternativ hierzu können die Steuereinrichtung 130 oder auch einzelne ihrer Komponenten innerhalb des Sensorkopfes 101 untergebracht sein.

Im Betrieb des Lidarsystems 100 erzeugt jede Laserquelle der Sendeeinrichtung 110 einen eigenen Sendelaserstrahl 210 in Form einer zeitlichen Abfolge kurzer Einzellaserpulse. Der Sendelaserstrahl 210 beleuchtet dabei mit jedem Einzellaserpuls einen den Erfassungsbereich 310 des jeweiligen Einzellaserpulses definierenden Raumwinkel, welcher typischerweise nur einen relativ kleinen Ausschnitt des gesamten Beobachtungsbereichs 300 des Lidarsystems 100 darstellt. Erst durch die rotierende Scanbewegung 122 und die damit einhergehende sukzessive Verschiebung der Erfassungsbereiche 310 aufeinander folgender Einzellaserpulse wird eine Abtastung des gesamten Beobachtungsbereichs 300 erzielt. In der Figur 2 ist beispielhaft eine Mess-Sequenz mit drei zeitlich nacheinander emittierten Einzellaserpulse sowie ihren jeweiligen Erfassungsbereichen 310 dargestellt. Die Erfassungsbereiche 310 sind dabei mittels einer gestrichelten Linie gezeichnet. Der aktuelle Erfassungsbereich 310 des Sendelaserstrahls 210 ist im vorliegenden Ausführungsbeispiel kreisförmig dargestellt. Je nach Anwendung kann der Querschnitt des Sendelaserstrahls 210, welcher die Form des Erfassungsbereichs 310 definiert, jedoch auch anders gestaltet sein, beispielsweise elliptisch oder annähernd quadratisch. Aufgrund der Scanbewegung 122 des Sensorkopfes 101 werden die einzelnen Einzellaserpulse unter verschiedenen Winkeln emittiert, so dass der Sendelaserstrahl 210 mit seinem jeweils aktuellen Erfassungsbereich 310 in vorgegebenen Winkelschritten über das jeweils abgetastete Objekt 400 wandert. Bei dem Multipuls-Lidarsystem sind die Wiederholrate der Einzellaserpulse und die Scanbewegung 123 dabei jeweils so aufeinander abgestimmt, dass ein vom Sendelaserstrahl 210 erfasster Bereich und damit die in dem jeweiligen Bereich liegenden Abtastpunkte (hier nicht gezeigt) während eines Scandurchgangs von mehreren unmittelbar aufeinander folgenden Einzellaserpulsen abgetastet werden.

Wie in der Figur 2 gezeigt ist, wird der an dem Objekt 400 reflektierte bzw. von dem Objekt 400 zurück gestreute Sendelaserstrahl 210 in Form eines Empfangslaserstrahls 220 im Sensorkopf 101 empfangen und auf die Detektionsfläche 141 abgebildet. Infolge der Scanbewegung 122 wird ein im aktuellen Erfassungsbereich 310 liegender Abtastpunkt, bei dem es sich beispielsweise um ein Detail des Fahrzeugs 400 handeln kann, bei aufeinander folgenden Leserpulsen jeweils um einen definierten Abstand verschoben auf der Detektionsfläche 141 abgebildet.

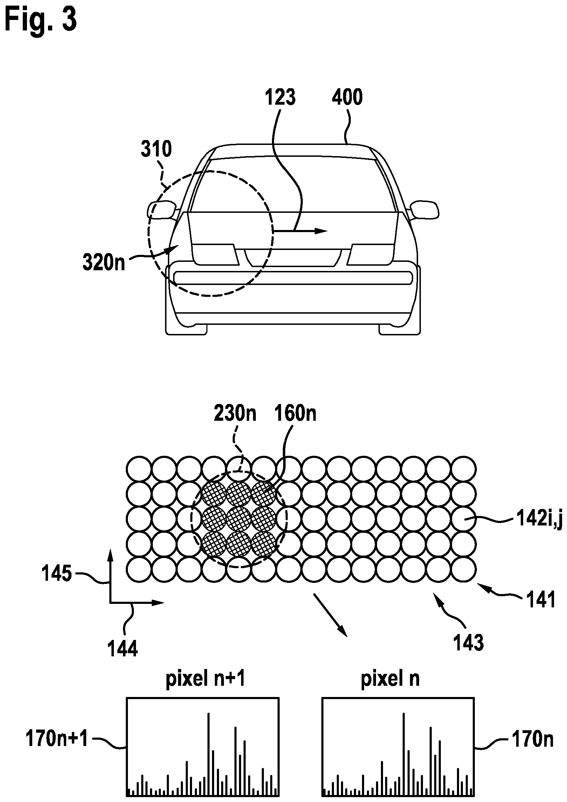

Im Folgenden wird die Umgruppierung von Subdetektoren näher beschrieben, durch welche eine Verschiebung der Makro-Pixel auf der Detektionsfläche und damit eine Kompensation der rotierenden Scanbewegung erreicht wird. Hierzu zeigen die **Figuren 3 bis 5** die bereits in der Figur 2 gezeigte kurze Scansequenz, welche die Abtastung des Fahrzeugs 400 mittels dreier Einzellaserpulse umfasst. Die **Figur 3** zeigt dabei eine erste Einzelmessung, bei der das Fahrzeug 400 mittels eines ersten Einzellaserpulses beleuchtet wird. Der aktuelle Erfassungsbereich 310 erfasst dabei wenigstens einen ersten Abtastpunkt 320ₙ, welcher auf der Detektionsfläche 141 in Form eines entsprechenden Bildpunkts 230ₙ abgebildet wird. Der mittels eines gestrichelten Kreises dargestellte Bildpunkt 230ₙ beleuchtet dabei insgesamt neun der Subdetektoren 142_{i,j} der matrixförmigen Subdetektoranordnung 143, welche in Figur 3 dunkel schraffiert dargestellt sind. Die betreffenden Subdetektoren 142_{i,j} werden folglich zu einem den ersten Abtastpunkt 320ₙ repräsentierenden ersten Makro-Pixel 160ₙ gruppiert. Dabei werden die Signale der gruppierten Subdetektoren 142_{i,j} gemeinsam einem dem ersten Makro-Pixel 160ₙ zugeordneten Histogramm 170ₙ zugewiesen. In diesem Histogramm 170ₙ werden die Signale aller während der gesamten Messung dem Makro-Pixel 160ₙ zugeordneten Subdetektoren 142_{i,j} aufaddiert. Hierdurch kann das Signal-Rausch Verhältnis verbessert werden.

Im Unterschied zur Figur 2 weist die Detektionsfläche 141 im vorliegenden Ausführungsbeispiel eine matrixförmige Subdetektoranordnung 143, welche in einer ersten Erstreckungsrichtung 144 insgesamt vierzehn nebeneinander angeordnete Subdetektoren 142_{i,j} und in einer zweiten Erstreckungsrichtung 145 insgesamt fünf hintereinander angeordnete Subdetektoren 142_{i,j} umfasst.

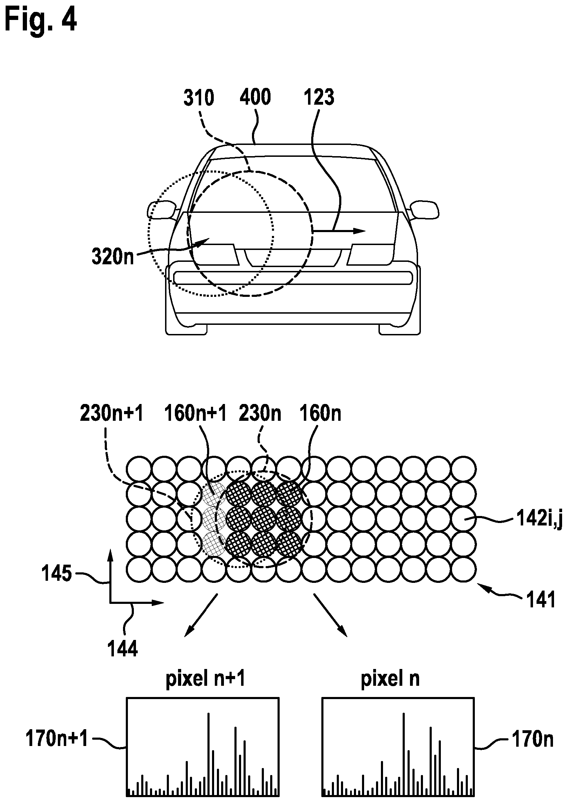

Bei dem in der **Figur 4** gezeigten Verfahrensstand ist der Sendelaserstrahl 210 infolge der Scanbewegung 122 in Scanrichtung 123 weiter gewandert. Der aktuelle emittierte zweite Einzellaserpuls weist daher einen um einen bestimmten Winkelbetrag in Scanrichtung 123 verschobenen Erfassungsbereich 310 auf. Infolge dessen verschiebt sich auch die Projektion des ersten Abtastpunktes 320ₙ und damit die Position des ersten Bildpunkts 230ₙ auf der Detektionsfläche 141 um einen definierten Betrag. Die Verschiebung des Bildpunkts 230ₙ hängt dabei unmittelbar von den Abbildungseigenschaften der optischen Komponenten sowie der jeweiligen Winkeldifferenz zwischen den Einzelmessungen und damit von der Scangeschwindigkeit 122 und der Messrate ab. Im vorliegenden Ausführungsbeispiel sind diese Parameter so aufeinander abgestimmt, dass der Abtastpunkt 320ₙ bei nachfolgenden Einzelmessungen auf der Detektionsfläche jeweils um eine Strecke verschoben abgebildet wird, welche möglichst exakt der lateralen Breite der Subdetektoren 142_{i,j} entspricht. Auf diese Weise wird sichergestellt, dass die Subdetektoren 142_{i,j} stets eindeutig einem der Makro-Pixel 160ₙ zugeordnet werden können. Dies gilt auch für Ausführungsformen, bei denen die Schritte, mit denen die Bildpunkte bei nachfolgenden Einzelmessungen verschoben auf der Detektionsfläche abgebildet werden, einem ganzzahligen Vielfachen der lateralen Breite der Subdetektoren 142_{i,j} betragen. Abhängig von der jeweiligen Anwendung können die entsprechenden Parameter des Lidarsystems jedoch auch so ausfallen, dass die Schritte, mit denen die Bildpunkte bei nachfolgenden Einzelmessungen verschoben auf der Detektionsfläche abgebildet werden, jeweils einem Bruchteil der lateralen Breite der Subdetektoren betragen. Darüber hinaus können auch Lidarsysteme realisiert werden, bei denen die Verschiebung der Bildpunkte auf der Detektionsfläche in keinem rationalen Verhältnis zu der lateralen Breite der Subdetektoren 142_{i,j} steht. Dies ist insbesondere dann möglich, wenn unmittelbar benachbarte Abtastpunkte mit einem Abstand auf der Detektionsfläche abgebildeten, welcher wenigstens der Breite eines Subdetektors entspricht.

Wie in der Figur 4 gezeigt ist, wurde die durch die Scanbewegung 122 bedingte Verschiebung des ersten Bildpunkts 230ₙ auf der Detektionsfläche 141 durch eine entsprechende Verschiebung des dem ersten Bildpunkt 230ₙ zugeordneten ersten Makro-Pixels 160ₙ kompensiert. Die Verschiebung des ersten Makro-Pixels 160ₙ erfolgt dabei durch eine Umgruppierung der betreffenden Subdetektoren 142_{i,j}. Hierzu sind dem ersten Makro-Pixel 160ₙ auf seiner rechten Seite nunmehr drei neue Subdetektoren 142_{i,j} zugewiesen worden. Hingegen sind die in der Figur 4 hell schraffierten drei Subdetektoren 142_{i,j}, welche bei der vorhergehenden Einzelmessung noch dem ersten Makro-Pixel 160ₙ zugeordnet waren, nunmehr dem nachfolgenden zweiten Makro-Pixel 160ₙ₊₁ zugeordnet, welches sich quasi von links in den aktiven Teil der Subdetektoranordnung 143 hinein bewegt. Entsprechend ihrer jeweiligen Zuordnung werden die Signale der dunkel schraffierten Subdetektoren 142_{i,j} dem Histogramm 170ₙ des ersten Makro-Pixels 160ₙ und die Signale der hell schraffierten Subdetektoren 142_{i,j} dem Histogramm 170ₙ₊₁ des zweiten Makro-Pixels 160ₙ₊₁ zugewiesen.

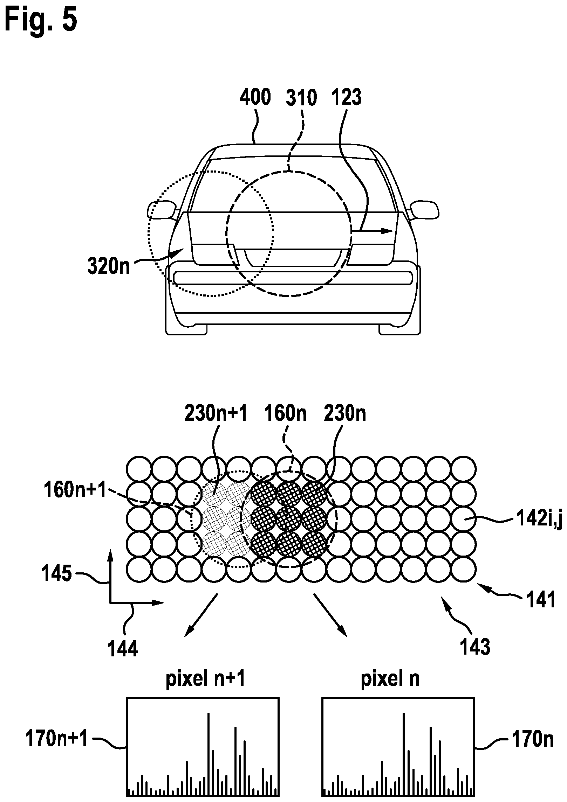

Die **Figur 5** zeigt einen Verfahrensstand während der dritten Einzelmessung, welche unmittelbar nach der in Figur 4 dargestellten zweiten Einzelmessung folgt. Hierbei ist der Sendelaserstrahl infolge der Scanbewegung um einen weiteren Winkelbetrag nach rechts gewandert, so dass der zugehörigen Erfassungsbereich 310 nunmehr um einen weiteren Betrag gegenüber der in der Figur 3 gezeigten ersten Einzelmessung gewandert ist. Da sich damit die relative Position des ersten Abtastpunktes 320ₙ in Bezug auf den aktuellen Erfassungsbereich 310 geändert hat, wird der erste Abtastpunkt 320ₙ nunmehr um einen entsprechenden Betrag verschoben auf der Detektionsfläche 141 abgebildet. Wie aus der Figur 5 ersichtlich ist, beträgt die Verschiebung des ersten Bildpunkts 230ₙ gegenüber der Situation aus der Figur 3 nunmehr insgesamt dem zweifachen der lateralen Breite der Subdetektoren 142_{i,j}. Entsprechend wurde auch die Position des zugehörigen ersten Makro-Pixels 160ₙ durch Umgruppieren entsprechender Subdetektoren 142_{i,j} der Position des ersten Bildpunkts 230ₙ folgend geändert. Im Vergleich zu der Anordnung aus Figur 4 sind dem ersten Makro-Pixel 160ₙ auf seiner rechten Seite erneut drei neue Subdetektoren 142_{i,j} zugewiesen worden. Entsprechend sind die in der Figur 5 hell schraffierten drei Subdetektoren 142_{i,j}, welche bei der vorhergehenden Einzelmessung noch dem ersten Makro-Pixel 160ₙ zugeordnet waren, nunmehr dem nachfolgenden zweiten Makro-Pixel 160ₙ₊₁ zugeordnet. Infolge dessen werden im Rahmen der aktuellen Einzelmessung die Signale aller Subdetektoren 142_{i,j}, welche einem der Makro-Pixel 160ₙ, 160ₙ₊₁zugeordnet sind, jeweils dem Histogramm 170ₙ, 170ₙ₊₁ des betreffenden Makro-Pixel 160ₙ, 160ₙ₊₁ zugewiesen.

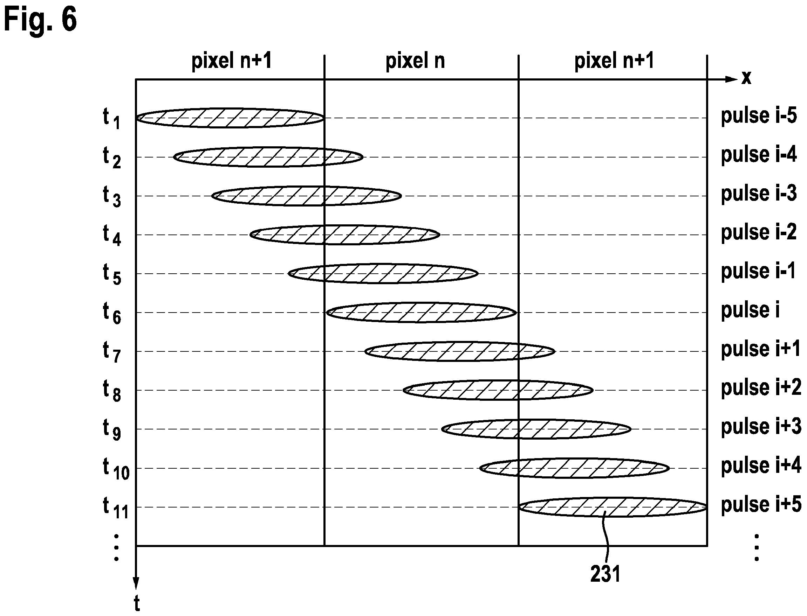

Die **Figur 6** zeigt ein Zeit-Diagramm, mit dem verdeutlicht wird, wie die Subdetektoren 142_{i,j} der Detektionsfläche 141 im Verlauf eines Scanvorgangs individuell verschiedenen Makro-Pixeln 160ₙ zugeordnet werden. Dargestellt ist dabei ein ellipsenförmiger Lichtfleck 231, welcher durch die Abbildung des Empfangslaserstrahls 220 auf der Detektionsfläche 141 erzeugt wird. Der Lichtfleck 231 erstreckt sich dabei über den gesamten aktiven Teil der Detektionsfläche 141, welcher im vorliegendem Fall zwecks Veranschaulichung nur fünf Subdetektoren 142_{i,j} umfasst. Bei einem Scanvorgang, bei welchem der Sendelaserstrahl 210 infolge der Scanbewegung sukzessiv über aufeinanderfolgende Abtastpunkte geführt wird, werden die entsprechenden Abtastpunkte zeitlich nacheinander in Form von Bildpunkten auf der Detektionsfläche 141 abgebildet. Durch die Scanbewegung entsteht somit der Eindruck, dass die Bildpunkte und damit die ihnen jeweils zugeordneten Makro-Pixel über die Detektionsfläche 141 wandern. Aus der Perspektive der Makro-Pixel betrachtet entsteht hingegen der Eindruck, dass sich der auf der Detektionsfläche 141 über die oben erwähnte Gruppe von insgesamt fünf Subdetektoren 142_{i,j} erstreckende Lichtfleck 231 sukzessiv über eine Reihe nebeneinander angeordneter Makro-Pixel 160ₙ hinweg bewegt. Diese scheinbare Bewegung des Lichtflecks 231 über eine Gruppe von insgesamt drei aufeinanderfolgenden Makro-Pixeln ist in dem Zeit-Diagramm der Figur 6 dargestellt. Dabei ist ersichtlich, dass zum Zeitpunkt t₆ alle Subdetektoren 142_{i,j} der betrachteten Gruppe dem mittleren Makro-Pixel (pixel n) zugeordnet werden. Bei dem nachfolgenden Einzellaserpuls (pixel n+1) zum Zeitpunkt t₇ werden von der betrachteten Gruppe nunmehr lediglich vier der Subdetektoren 142_{i,j} dem mittleren Makro-Pixel (pixel n) zugeordnet, während bereits einer der Subdetektoren 142_{i,j} der Gruppe dem rechten der drei dargestellten Makro-Pixel (pixel n+1) zugeordnet wird. Bei einem weiteren Einzellaserpulses (pulse i+2) zum Zeitpunkt t₈ werden bereits zwei der Subdetektoren 142_{i,j} der betrachteten Gruppe dem rechten Makro-Pixel (pixel n+2) zugeordnet. Auf diese Weise wandert der Lichtfleck 231 pro Einzellaserpuls jeweils um einen Subdetektor über die hier drei dargestellten Makro-Pixel (pixel n-1, pixel n, pixel n+1) hinweg. Aus dem Diagramm wird somit ersichtlich, dass ein Subdetektor 142_{i,j}, welcher während eines ersten Einzellaserpulses einem ersten Makro-Pixel zugeordnet ist, nach spätestens fünf weiteren Einzellaserpulsen einem dem ersten Makro-Pixel nachfolgenden zweiten Makro-Pixel zugeordnet wird.

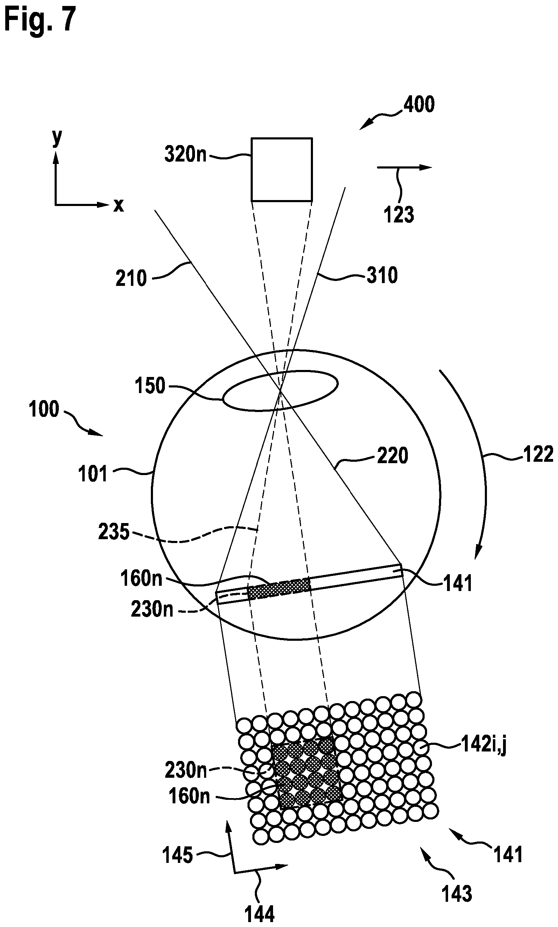

Im Folgenden wird der Zusammenhang zwischen der rotierenden Scanbewegung und der Verschiebung eines Bildpunkts auf der Detektionsfläche verdeutlicht. Hierzu zeigen die Figuren **7 bis 9** eine drei Einzelmessungen umfassende Sequenz des Scanvorgangs. Dargestellt ist jeweils eine vereinfachte Ausführungsform des Sensorkopfes 101, wobei die Laserstrahlen 235 ohne Umlenkung durch einen Strahlenteiler mittels einer optischen Abbildungseinrichtung 150 direkt auf die Detektionsfläche 141 abgebildet werden. Wie in der Figur 7 gezeigt ist, erfasst der emittierte Sendelaserstrahl mit seinem kegelförmigen Erfassungsbereich 310 ein sich aktuell im Blickbereich des Sensorkopfes 101 befindliches Objekt 400. Das erfasste Objekt 400 wird dabei in einem bestimmten Abtastpunkt 320ₙ abgetastet. Der Abtastpunkt 320ₙ wird dabei durch einen bestimmten Raumwinkel definiert, welcher im vorliegenden Ausführungsbeispiel deutlich kleiner ausfällt als der den Erfassungsbereich 310 definierenden Raumwinkel. Der Sendelaserstrahl wird am Objekt 400 zurück reflektiert und in Form eines Empfangslaserstrahls vom Sensorkopf 101 des Lidarsystems 100 wieder empfangen. Dabei wird der dem Objekt 400 zugeordnete Abtastpunkt 320ₙ in Form eines Bildpunkts 230ₙ auf der Detektionsfläche 141 abgebildet. Zur besseren Veranschaulichung ist die Detektionsfläche 141, welche im vorliegenden Ausführungsbeispiel eine zweidimensionale Subdetektoranordnung 143 in Form einer 12×8-Matrix ausgebildet ist, sowohl in der Seitenansicht als auch in einer Draufsicht dargestellt.

Wie aus der Figur 7 ersichtlich ist, werden die im vorliegenden Beispiel insgesamt 16 vom aktuellen Bildpunkt 230ₙ erfasst Subdetektoren 142_{i,j}, welche in der Figur 7 dunkel schraffiert gezeichnet sind, zu einem dem jeweiligen Bildpunkt zugeordneten Makro-Pixel 160ₙ gruppiert. Die Gruppierung erfolgt dabei durch Zusammenschalten der Subdetektoren, wobei die von den einzelnen Subdetektoren142_{i,j} detektierten Signale in einem gemeinsamen Histogramm aufsummiert werden.

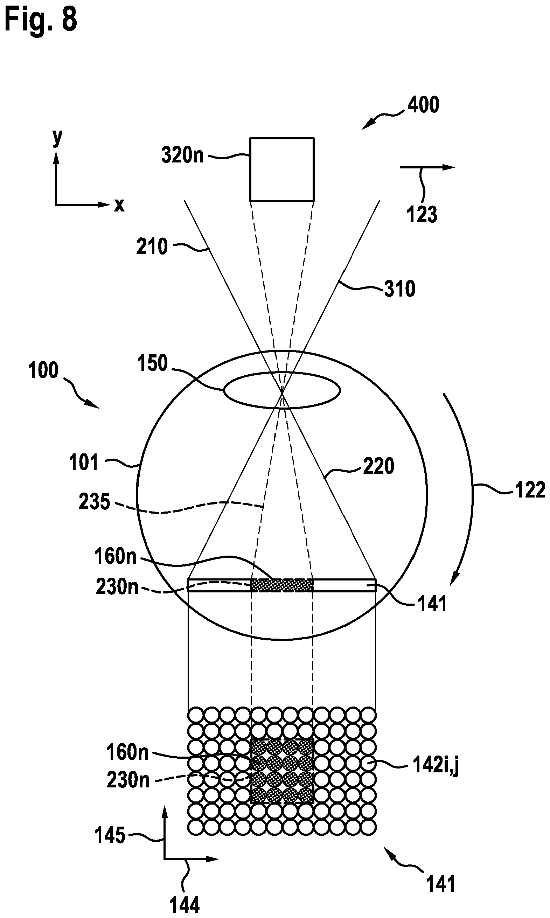

Die **Figur 8** zeigt die Anordnung aus Figur 7 bei der anschließenden zweiten Einzelmessung. Dabei ist der Sendelaserstrahl 210 infolge der Scanbewegung 122 in Scanrichtung 123 weiter gewandert. Der Erfassungsbereich 310 des aktuellen Einzellaserpulses ist somit um einen bestimmten Winkelbetrag in Scanrichtung 123 verschobenen. Da sich der Abtastpunkt 320ₙ aktuell im Zentrum des Erfassungsbereichs 310 befindet, wird auch der die Projektion des ersten Abtastpunktes 320ₙ repräsentierende erste Bildpunkt 230ₙ zentral auf der Detektionsfläche 141 abgebildet. Gegenüber der vorhergehenden Einzelmessung weist der erste Bildpunkt 230ₙ auf der Detektionsfläche 141 eine Verschiebung in der ersten Erstreckungsrichtung 144 um eine definierte Wegstrecke auf, welche im vorliegenden Fall dem Zweifachen der lateralen Breite der Subdetektoren entspricht. Um die durch die Scanbewegung 122 des Sensorkopfes 101 verursachte Verschiebung des Bildpunkts 230ₙ auf der Detektionsfläche 141 zu kompensieren, verschiebt die Steuereinrichtung des Lidarsystems 100 durch Aktivieren und Deaktivieren entsprechender Subdetektoren auch die Position des dem Bildpunkt 230ₙ zugeordneten Makro-Pixels 160ₙ um die jeweilige Wegstrecke.

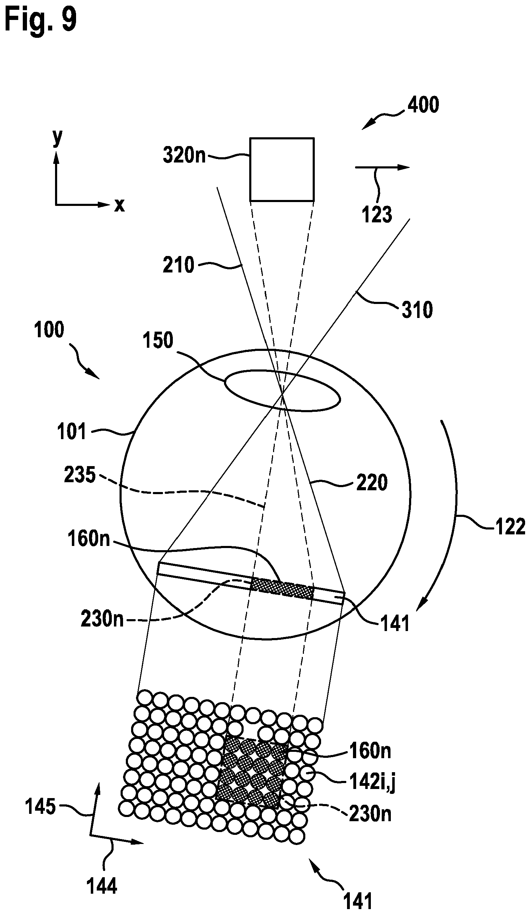

Die **Figur 9** zeigt die Anordnung aus den Figur 7 und 8 bei der anschließenden dritten Einzelmessung. Aufgrund der Scanbewegung 122 des Sensorkopfes 101 sind der Sendelaserstrahl 210 und damit auch sein Erfassungsbereich 310 in Scanrichtung 123 um den gleichen Winkelbetrag wie bereits zuvor weiter gewandert. Der Abtastpunkt 320ₙ ist somit aus Perspektive des Sensorkopfes 101 um den entsprechenden Winkelbetrag weiter nach links verschoben.

Demzufolge ist der erste Bildpunkt 230ₙ auf der Detektionsfläche um die zweifache laterale Breite der Subdetektoren 142_{i,j} nach rechts in der ersten Erstreckungsrichtung 144 gewandert. Auch das zugehörige erste Makro-Pixel 160ₙ wurde durch Umgruppierung entsprechender Subdetektoren 142_{i,j} dem ersten Bildpunkt 230ₙ folgend um zwei Subdetektoren 142_{i,j} nach rechts verschoben.

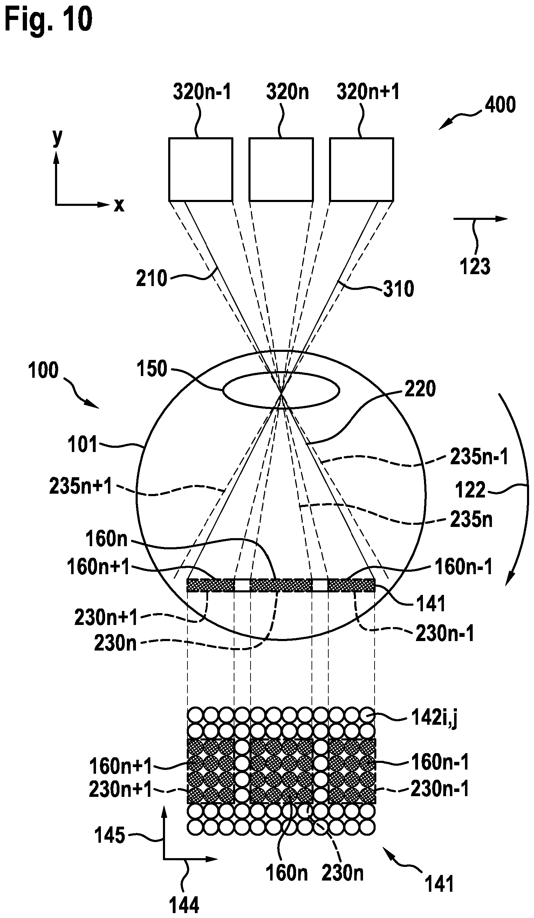

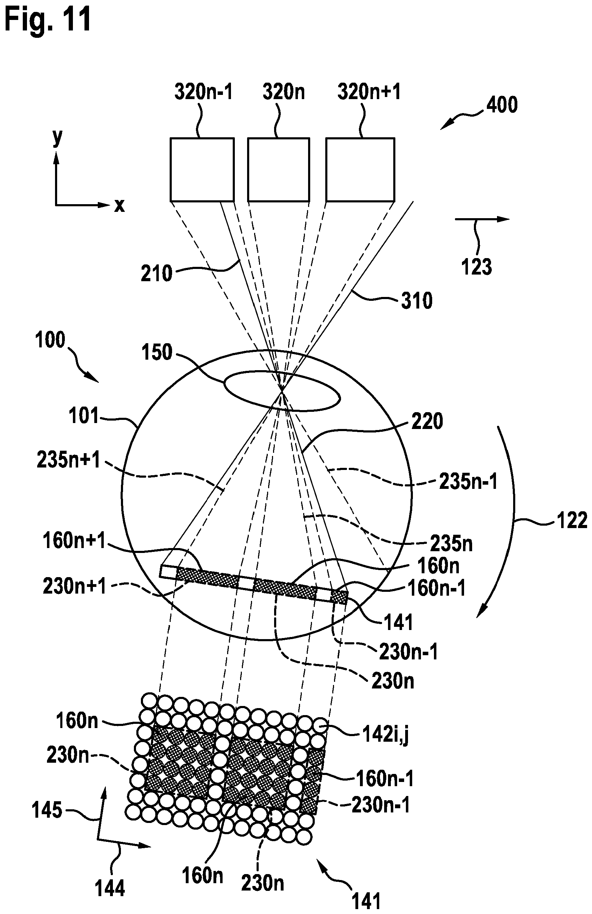

Die **Figuren 10** **und** **11** zeigen eine weitere Ausführungsform, bei welcher mit jedem Einzellaserpuls gleichzeitig mehrere lateral nebeneinander angeordnete Abtastpunkte abgetastet werden. Die Messanordnung entspricht dabei im Wesentlichen der Anordnung aus den Figuren 7 bis 9. Wie aus der Figur 10 ersichtlich ist, umfasst der Erfassungsbereich 310 des Sendelaserstrahls 210 insgesamt drei in Scanrichtung 123 nebeneinander angeordnete Abtastpunkte 320ₙ₋₁, 320ₙ, 320ₙ₊₁. Dabei wird lediglich der mittlere Abtastpunkt 320ₙ vollständig erfasst, während die beiden äußeren Abtastpunkte 320ₙ₋₁, 320ₙ₊₁ nicht ganz vollständig im aktuellen Erfassungsbereich 310 liegen. Die drei Abtastpunkte 320ₙ₋₁, 320ₙ, 320ₙ₊₁ werden dabei auf verschiedene Bereiche der Detektionsfläche 141 abgebildet. Durch Aktivierung und Gruppierung entsprechender Subdetektoren 142_{i,j} werden auf der Detektionsfläche 141 gleichzeitig drei den jeweiligen Abtastpunkten 320ₙ₋₁, 320ₙ, 320ₙ₊₁ zugeordnete Makro-Pixel 160ₙ₋₁, 160ₙ, 160ₙ₊₁ erzeugt, welche jeweils 16 Subdetektoren 142_{i,j} umfassen und jeweils durch eine Spalte von Subdetektoren voneinander getrennt sind. Die **Figur 11** zeigt die Anordnung aus Figur 10 bei einer darauf folgenden zweiten Einzelmessung. Wie hierbei ersichtlich ist, ist der Sendelaserstrahl 210 und damit auch sein aktueller Erfassungsbereich 310 infolge der Scanbewegung 122 um einen definierten Winkelbetrag in Scanrichtung 123 weiter gewandert. Aus Sicht des Sensorkopfes 101 sind die drei Abtastpunkte 320ₙ₋₁, 320ₙ, 320ₙ₊₁ dabei um den gleichen Winkelbetrag entgegen der Scanrichtung 123 nach links verschoben, wobei der linke Abtastpunkt 320ₙ₋₁ dabei fast vollständig aus dem Erfassungsbereich 310 herausgetreten ist während der rechte Abtastpunkt 320ₙ₊₁ nunmehr vollständig in den Erfassungsbereich 310 eingetreten ist. Auf der Detektionsfläche 141 haben sich die durch die Projektionen 235ₙ₋₁, 235ₙ, 235ₙ₊₁ der Abtastpunkte erzeugten Bildpunkte 230ₙ₋₁, 230ₙ, 230ₙ₊₁ entsprechend um eine Strecke verschoben, welche dem Zweifachen der lateralen Breite eines Subdetektors entspricht. Zur Kompensation dieser Verschiebung wurden auch die den jeweiligen Bildpunkten 230ₙ₋₁, 230ₙ, 230ₙ₊₁ zugeordneten Makro-Pixel 160ₙ₋₁, 160ₙ, 160ₙ₊₁ durch Umgruppieren entsprechender Subdetektoren 142_{i,j} um das Zweifache der lateralen Breite eines Subdetektors verschoben. Wie aus einem Vergleich der beiden Figuren 10 und 11 ersichtlich ist, wurde zum Verschieben der mittleren Makro-Pixels 160ₙ auf der Detektionsfläche 141 sowohl eine erste vertikale Reihe von vier Subdetektoren aktiviert und dem mittleren Makro-Pixel 160ₙ zugeordnet, dessen Subdetektoren zuvor rechts vom mittleren Makro-Pixel 160ₙ angeordnet und deaktiviert waren, als auch eine zweite vertikalen Reihe von vier Subdetektoren, dessen Subdetektoren zuvor dem rechten Makro-Pixel 160ₙ₋₁ zugeordnet waren. Ferner wurden auf der linken Seite des mittleren Makro-Pixels 160ₙ zwei vertikalen Reihen von jeweils vier Subdetektoren, deaktiviert, deren Subdetektoren zuvor dem ersten Makro-Pixel 160ₙ zugeordnet waren.

Im Unterschied zu der in den Figuren 3 bis 5 Messanordnung, welcher lateral nebeneinander angeordnete Abtastpunkte unmittelbar aneinander grenzen, weisen die Abtastpunkte im vorliegenden Ausführungsbeispiel einen geringen Abstand voneinander auf. Dieser Abstand ermöglicht eine schärfere Trennung der einzelnen Abtastpunkte bzw. der zugehörigen Makro-Pixel voneinander. Je nach Ausführungsform kann dieser Abstand dabei kleiner oder größer ausfallen. Sofern die Scangeschwindigkeit, die Messrate und die Abbildungseigenschaften der optischen Komponenten so aufeinander abgestimmt werden, dass die Verschiebung der Abtastpunkte bei unmittelbar aufeinander folgenden Einzelmessungen möglichst exakt dem Abstand der Subdetektoren auf der Detektionsfläche bzw. einem ganzzahligen Mehrfachen dieses Abstands entspricht, können auch Abtastpunkte ohne einen solchen Abstand bzw. mit einem nur marginal kleinen Abstand voneinander realisiert werden. Hierdurch lässt sich eine besonders hohe laterale Bildauflösung erreichen.

Sofern die Subdetektoren vor jedem Empfangen zunächst aktiviert werden müssen, erfolgt die Gruppierung und Aktivierung der betreffenden Subdetektoren sinnvollerweise jeweils kurz vor dem Auftreffen des reflektierten bzw. zurückgestreuten Einzellaserpulses auf der Detektionsfläche. Bei Subdetektoren, welche ohne wesentliche Verzögerung detektieren können und somit quasi kontinuierlich betrieben werden können, kann die Gruppierung der betreffenden Subdetektoren zu Makro-Pixeln gegebenenfalls auch während oder sogar kurz nach der jeweiligen Einzelmessung erfolgen.

Der prinzipielle Aufbau der Erfindung deckt sich mit üblichen Macro- Lidar-Scannern. Während herkömmliche Scanner jedoch jeweils einen einzelnen Detektor pro vertikaler Ebene verwenden, wird bei dem erfindungsgemäßen Scanner jedoch eine sich in Rotationsebene erstreckende Anordnung von Subdetektoren verwendet, beispielsweise eine Subdetektor-Zeile oder ein Subdetektor-Array (matrixförmige Anordnung von Subdetektoren). Die einzelnen Subdetektoren der Subdetektoranordnung können dabei individuell zu Makro-Detektoren zugeordnet werden. In den Figuren 3 bis 5 wurde beispielhaft der Ablauf einer Messung bestehend aus einer Anzahl "N" von Einzellaserpulsen. Zum Zeitpunkt der ersten Pulsemission werden die in der Figur 3 dunkel schraffierten Subdetektoren zu einem ersten Makro-Pixel 160ₙ zugeordnet. Die Abbildung des empfangenen Einzellaserpulses ist zentriert auf dem ersten Makro-Pixel 160ₙ angenommen. In Abhängigkeit von der Rotationsgeschwindigkeit des Sensorkopfes 101 wird sich die Abbildung des Einzellaserpulses mit einer definierten Geschwindigkeit über die zweidimensionale Subdetektoranordnung bewegen. In der Figur 4 ist das erste Makro-Pixel 160ₙ nach einer Verschiebung von genau einem Subdetektor dunkel schraffiert dargestellt, während die ursprüngliche Position des ersten Makro-Pixel 160ₙ mittels eines mit einer gepunkteten Linie gezeichneten Kreises angedeutet ist. Wird das Makro-Pixel nun wie angedeutet aufgeteilt, bleibt die räumliche Auflösung für das erste Makro-Pixel 160ₙ erhalten, während die von den hell schraffierten Subdetektoren empfangene Pulsenergie und somit auch die Messzeit schon für das nachfolgende zweite Makro-Pixel 160ₙ₊₁ genutzt wird. Dieser Ansatz ermöglicht somit Mehrpuls-Messprinzipien, welche trotz der kontinuierlichen Rotationsbewegung dieselbe laterale Auflösung aufweisen, wie ein Einzelpuls-System. Insbesondere wird keine Pulsenergie beziehungsweise Messzeit verschwendet. Das Prinzip ist dabei grundsätzlich sowohl für biaxiale als auch für koaxiale Makro-Scanner anwendbar.

Obwohl die Erfindung vorwiegend anhand von konkreten Ausführungsbeispielen beschrieben wurde, ist sie keineswegs darauf beschränkt. Der Fachmann wird somit die beschriebenen Merkmale geeignet abändern und miteinander kombinieren können, ohne vom Kern der Erfindung abzuweichen. Insbesondere können die hier jeweils separat beschriebenen Methoden zur lokalen Modifikation der magnetischen Eigenschaften der Korrekturschicht auch beliebig miteinander kombiniert werden.

## Patentansprüche

1. Multipuls-Lidarsystem (100) zur Erfassung von Objekten (400) in einem Beobachtungsbereich (300) umfassend:
- eine Sendeeinrichtung (110) mit wenigstens einer Laserquelle (111) zum Erzeugen eines Sendelaserstrahls (210) aus einer zeitlichen Abfolge von Einzellaserpulsen, welche jeweils einen auf einen Teil des Beobachtungsbereichs (300) begrenzten Erfassungsbereich (310ₙ) beleuchten und in wenigstens einem Abtastpunkt (320ₙ) abtasten,
- eine Empfangseinrichtung (140) mit einer Detektionsfläche (141) umfassend eine zeilen- oder matrixförmige Subdetektoranordnung (152) aus mehreren in einer ersten Erstreckungsrichtung (144) nebeneinander angeordneten Subdetektoren (142_{i,j}) zum Empfangen des an Objekten (400) im Beobachtungsbereich (300) des Multipuls-Lidarsystems (100) reflektieren und/oder gestreuten Sendelaserstrahls (210) in Form eines Empfangslaserstrahls (220),
wobei die Empfangseinrichtung (130) ausgebildet ist, einen vom Sendelaserstrahl (210) erfassten Abtastpunkt (320ₙ) auf der Detektionsfläche (141) in Form eines Bildpunkts (230ₙ) abzubilden,
- eine Scaneinrichtung (120) zum Erzeugen einer Scanbewegung (122) des Sendelaserstrahls (210) in einer Scanrichtung (123) zu einer sukzessiven Abtastung des gesamten Beobachtungsbereichs (300) entlang mehrerer in der Scanrichtung (123) aufeinanderfolgenden Abtastpunkte (320ₙ),
wobei die Scanbewegung (122) des Sendelaserstrahls (210) ausgebildet ist, einen Bildpunkt (230ₙ) bei zeitlich nacheinander folgenden Einzellaserpulsen jeweils entlang der zeilen- oder matrixförmige Subdetektoranordnung (143) verschoben auf der Detektionsfläche (141) abzubilden, und
- eine Steuereinrichtung (130) zum Bestimmen von Entfernungsinformationen der Abtastpunkte (320ₙ) anhand von Laufzeiten der jeweiligen Einzellaserpulse,
wobei die Steuereinrichtung (130) ausgebildet ist, Subdetektoren (142_{i,j}), welche von einem auf der Detektionsfläche (141) aktuell abgebildeten Bildpunkt (230ₙ) erfasst werden, zur gemeinsamen Auswertung zu einem dem jeweiligen Bildpunkt (230ₙ) individuell zugeordneten Makro-Pixels (160ₙ) zu gruppieren, **dadurch gekennzeichnet, dass**
die Steuereinrichtung (130) ferner ausgebildet ist,
die bei mehreren Einzelmessungen für ein bestimmtes Makro-Pixel (160ₙ) gemessenen Signale der in diesen Einzelmessungen dem jeweiligen Makro-Pixel (160ₙ) zugeordneten Subdetektoren (142_{i,j}) gemeinsam einem dem jeweiligen Makro-Pixel (160ₙ) zugeordneten Histogramm (170ₙ) zuzuordnen und
die Position eines Makro-Pixels (160ₙ) auf der Detektionsfläche (141) durch Umgruppieren entsprechender Subdetektoren (142_{i,j}) der durch die Scanbewegung (122) verursachten Verschiebung des dem jeweiligen Makro-Pixel (160ₙ) zugeordneten Bildpunkts (230ₙ) auf der Detektionsfläche (141) folgend anzupassen, wobei sich die Geschwindigkeit des Umgruppierens der Subdetektoren direkt aus der Geschwindigkeit der Scanbewegung ergibt.

2. Multipuls-Lidarsystem (100) nach Anspruch 1,
wobei die Sendeeinrichtung (110) ausgebildet ist einen Sendelaserstrahl (210) zu erzeugen, dessen Einzellaserpulse jeweils einen Raumwinkel (310ₙ) mit wenigstens zwei Abtastpunkten (320ₙ) beleuchten,
wobei die Empfangseinrichtung (140) ausgebildet ist, die beiden Abtastpunkte (320ₙ) in dem von dem Sendelaserstrahl (210) aktuell beleuchteten Abtastbereich (310) in Form von zwei auf der Detektionsfläche (141) nebeneinander angeordneten und sich infolge der Scanbewegung (122) entlang der zeilen- oder matrixförmigen Subdetektoranordnung (143) verschiebenden Bildpunkte (230ₙ, 230ₙ₊₁) darzustellen, und
wobei die Steuereinrichtung (130) ausgebildet ist, Subdetektoren (142_{i,j}), welche aktuell von einem ersten Bildpunkt (230ₙ) der beiden Bildpunkte (230ₙ, 230ₙ₊₁) erfasst werden, gemeinsam zu einem dem ersten Bildpunkt (230ₙ) zugeordneten ersten Makro-Pixel (160ₙ) zu gruppieren und Subdetektoren (142_{i,j}), welche aktuell von einem zweiten Bildpunkt (230ₙ₊₁) der beiden Bildpunkte (230ₙ, 230ₙ₊₁) erfasst werden, gemeinsam zu einem dem zweiten Bildpunkt (230ₙ₊₁) zugeordneten zweiten Makro-Pixel (160ₙ₊₁) zu gruppieren.

3. Multipuls-Lidarsystem (100) nach Anspruch 2,
wobei die Steuereinrichtung (130) ausgebildet ist, Subdetektoren (142_{i,j}), welche bei einer mittels eines ersten Einzellaserpulses erfolgenden ersten Einzelmessung von dem ersten Bildpunkt (230ₙ) und bei einer mittels eines dem ersten Einzellaserpuls zeitlich unmittelbar nachfolgenden zweiten Einzellaserpulses erfolgenden zweiten Einzelmessung von dem zweiten Bildpunkt (230ₙ₊₁) erfasst werden, bei der ersten Einzelmessung dem ersten Makro-Pixel (160ₙ) und bei der nachfolgenden zweiten Einzelmessung dem zweiten Makro-Pixel (160ₙ₊₁) zuzuordnen.

4. Multipuls-Lidarsystem (100) nach einem der vorhergehenden Ansprüche,
wobei die Sendeeinrichtung (110) mehrere Laserquellen (111) umfasst, deren Erfassungsbereiche (310) orthogonal zur Scanrichtung (123) untereinander angeordnet sind,
wobei die Detektionsfläche (141) für jede Laserquelle (111) eine der jeweiligen Laserquelle (111) individuell zugeordnete Subdetektoranordnung (143) umfasst, wobei die Subdetektoranordnungen (143) orthogonal zur Scanrichtung (123) untereinander angeordnet sind.

5. Verfahren zur mehrdimensionalen Erfassung von Objekten (400) in einem Beobachtungsbereich (300) mithilfe eines Multipuls-Lidarsystems (100) umfassend die Schritte:
- Erzeugen eines Sendelaserstrahls (210) in Form einer zeitlichen Abfolge von Einzellaserpulsen, wobei der Sendelaserstrahl (210) mit jedem Einzellaserpuls einen auf einen Teilabschnitt des Beobachtungsbereichs (300) begrenzten Erfassungsbereich (310) beleuchtet und dabei in wenigstens einem Abtastpunkt (320ₙ) abtastet,
- Erzeugen einer Scanbewegung (122) des Sendelaserstrahls (210) in einer Scanrichtung (123), welche eine sukzessive Abtastung des gesamten Beobachtungsbereichs (300) in mehreren in der Scanrichtung (123) aufeinanderfolgenden Abtastpunkten (320ₙ) bewirkt,
- Empfangen eines durch Reflexion und/oder Streuung des Sendelaserstrahls (210) an Objekten (400) im Beobachtungsbereich (300) erzeugten Empfangslaserstrahls (220) auf einer Detektionsfläche (141) mit einer zeilen- oder matrixförmigen Subdetektoranordnung (143) aus mehreren in einer ersten Erstreckungsrichtung (144) nebeneinander angeordneten Subdetektoren (142_{i,j}), wobei ein vom Sendelaserstrahl (210) aktuell erfasster Abtastpunkt (320ₙ) auf der Detektionsfläche (141) in Form eines sich infolge der Scanbewegung (122) des Sendelaserstrahls (210) sukzessiv entlang der zeilen- oder matrixförmigen Subdetektoranordnung (143) verschiebenden Bildpunkts (230ₙ) abgebildet wird,
- Gruppieren von Subdetektoren (142_{i,j}), deren Positionen der aktuellen Position des Bildpunkts (230ₙ) entsprechen, zu einem dem jeweiligen Bildpunkt (230ₙ) individuell zugeordneten Makro-Pixel (160ₙ), und
- gemeinsames Auswerten der dem jeweiligen Makro-Pixel (160ₙ) zugeordneten Subdetektoren (142_{i,j}),
wobei die bei mehreren Einzelmessungen für ein bestimmtes Makro-Pixel (160ₙ) gemessenen Signale der in diesen Einzelmessungen dem jeweiligen Makro-Pixel (160ₙ) zugeordneten Subdetektoren (142_{i,j}) gemeinsam einem dem jeweiligen Makro-Pixel (160ₙ) zugeordneten Histogramm (170ₙ) zugeordnet werden,
wobei die Position eines Makro-Pixels (160ₙ) auf der Detektionsfläche (141) durch Umgruppieren entsprechender Subdetektoren (142_{i,j}) einer durch die Scanbewegung (122) verursachten Verschiebung des dem jeweiligen Makro-Pixel (160ₙ) zugeordneten Bildpunkts (230ₙ) auf der Detektionsfläche (141) folgend sukzessiv angepasst wird, wobei sich die Geschwindigkeit des Umgruppierens der Subdetektoren direkt aus der Geschwindigkeit der Scanbewegung ergibt.

6. Verfahren nach Anspruch 5,
wobei während einer Einzelmessung gleichzeitig mehrere Abtastpunkte (320ₙ, 320_{n ja+1}) erfasst werden,
wobei Subdetektoren (142_{i,j}), welche dabei von einem ersten Abtastpunkt (320ₙ) auf der Detektionsfläche (141) gebildeten ersten Bildpunkt (230ₙ) erfasst werden,
einem dem ersten Abtastpunkt (320n) individuell zugeordneten ersten Makro-Pixel (160ₙ) zugeordnet werden, und
wobei Subdetektoren (142_{i,j}), welche dabei von einem zweiten Abtastpunkt (320ₙ₊₁) auf der Detektionsfläche (141) gebildeten zweiten Bildpunkt (230ₙ₊₁) erfasst werden, einem dem zweiten Abtastpunkt (320ₙ₊₁) individuell zugeordneten zweiten Makro-Pixel (160ₙ₊₁) zugeordnet werden.

7. Verfahren nach einem der Ansprüche 5 bis 6,
wobei Subdetektoren (142_{i,j}), welche während einer ersten Einzelmessung von dem ersten Bildpunkt (230ₙ) und bei einer mittels eines dem ersten Einzellaserpuls zeitlich unmittelbar nachfolgenden zweiten Einzellaserpulses erfolgenden zweiten Einzelmessung von dem zweiten Bildpunkt (230ₙ₊₁) erfasst werden, bei der ersten Einzelmessung dem ersten Makro-Pixel (160ₙ) und bei der nachfolgenden zweiten Einzelmessung dem zweiten Makro-Pixel (160ₙ₊₁) zugeordnet werden.

## Claims

1. Multi-pulse lidar system (100) for capturing objects (400) in an observation region (300), comprising:
- a transmitting device (110) having at least one laser source (111) for generating a transmission laser beam (210) composed of a temporal sequence of individual laser pulses which each illuminate a capture region (310ₙ) delimited to a portion of the observation region (300) and scan it at at least scanning point (320ₙ) ,
- a receiving device (140) having a detection surface (141) comprising a linear or matrix-type subdetector arrangement (152) composed of a plurality of subdetectors (142_{i,j}) arranged next to one another in a first direction of extent (144), for receiving the transmission laser beam (210) reflected and/or scattered at objects (400) in the observation region (300) of the multi-pulse lidar system (100) in the form of a reception laser beam (220),
wherein the receiving device (130) is configured to image a scanning point (320ₙ) captured by the transmission laser beam (210) on the detection surface (141) in the form of an image point (230ₙ) ,
- a scanning device (120) for generating a scanning movement (122) of the transmission laser beam (210) in a scanning direction (123) for progressive scanning of the entire observation region (300) along a plurality of scanning points (320ₙ) disposed in succession in the scanning direction (123),
wherein the scanning movement (122) of the transmission laser beam (210) is configured, in the case of chronologically successive individual laser pulses, to image an image point (230ₙ) on the detection surface (141) in each case in a manner displaced along the linear or matrix-type subdetector arrangement (143), and
- a control device (130) for determining distance information of the scanning points (320ₙ) on the basis of times of flight of the respective individual laser pulses,
wherein the control device (130) is configured to group subdetectors (142_{i,j}) captured by an image point (230ₙ) currently imaged on the detection surface (141) to form a macro-pixel (160ₙ) assigned individually to the respective image point (230ₙ), for common evaluation, **characterized in that**
the control device (130) is furthermore configured to assign the signals, measured during a plurality of individual measurements for a specific macro-pixel (160ₙ), of the subdetectors (142_{i,j}) assigned to the respective macro-pixel (160ₙ) in these individual measurements jointly to a histogram (170ₙ) assigned to the respective macro-pixel (160ₙ) and to adapt the position of a macro-pixel (160ₙ) on the detection surface (141) by regrouping corresponding subdetectors (142_{i,j}) in a manner following the displacement, caused by the scanning movement (122), of the image point (230ₙ) assigned to the respective macro-pixel (160ₙ) on the detection surface (141), wherein the speed of the regrouping of the subdetectors results directly from the speed of the scanning movement.

2. Multi-pulse lidar system (100) according to Claim 1,
wherein the transmitting device (110) is configured to generate a transmission laser beam (210) whose individual laser pulses each illuminate a solid angle (310ₙ) with at least two scanning points (320ₙ),
wherein the receiving device (140) is configured to represent the two scanning points (320ₙ) in the scanning region (310) currently illuminated by the transmission laser beam (210) in the form of two image points (230ₙ, 230ₙ₊₁) that are arranged next to one another on the detection surface (141) and become displaced along the linear or matrix-type subdetector arrangement (143) owing to the scanning movement (122), and
wherein the control device (130) is configured to group subdetectors (142_{i,j}) currently captured by a first image point (230ₙ) of the two image points (230ₙ, 230ₙ₊₁) jointly to form a first macro-pixel (160ₙ) assigned to the first image point (230ₙ), and to group subdetectors (142_{i,j}) currently captured by a second image point (230ₙ₊₁) of the two image points (230ₙ, 230ₙ₊₁) jointly to form a second macro-pixel (160ₙ₊₁) assigned to the second image point (230ₙ₊₁).

3. Multi-pulse lidar system (100) according to Claim 2,
wherein the control device (130) is configured to assign subdetectors (142_{i,j}) captured by the first image point (230ₙ) during a first individual measurement, which is effected by means of a first individual laser pulse, and by the second image point (230ₙ₊₁) during a second individual measurement, which is effected by means of a second individual laser pulse chronologically directly succeeding the first individual laser pulse, to the first macro-pixel (160ₙ) during the first individual measurement and to the second macro-pixel (160ₙ₊₁) during the subsequent second individual measurement.

4. Multi-pulse lidar system (100) according to any of the preceding claims,
wherein the transmitting device (110) comprises a plurality of laser sources (111) whose capture regions (310) are arranged orthogonally to the scanning direction (123) among one another,
wherein the detection surface (141) for each laser source (111) comprises a subdetector arrangement (143) assigned individually to the respective laser source (111),
wherein the subdetector arrangements (143) are arranged orthogonally to the scanning direction (123) among one another.

5. Method for multi-dimensionally capturing objects (400) in an observation region (300) with the aid of a multi-pulse lidar system (100), comprising the following steps:
- generating a transmission laser beam (210) in the form of a temporal sequence of individual laser pulses, wherein the transmission laser beam (210), with each individual laser pulse, illuminates a capture region (310) delimited to a subsection of the observation region (300) and in the process scans it at at least one scanning point (320ₙ),
- generating a scanning movement (122) of the transmission laser beam (210) in a scanning direction (123), which brings about progressive scanning of the entire observation region (300) at a plurality of scanning points (320ₙ) disposed in succession in the scanning direction (123),
- receiving a reception laser beam (220), generated by reflection and/or scattering of the transmission laser beam (210) at objects (400) in the observation region (300) on a detection surface (141) having a linear or matrix-type subdetector arrangement (143) composed of a plurality of subdetectors (142_{i,j}) arranged next to one another in a first direction of extent (144), wherein a scanning point (320ₙ) currently captured by the transmission laser beam (210) is imaged on the detection surface (141) in the form of an image point (230ₙ) being displaced progressively along the linear or matrix-type subdetector arrangement (143) owing to the scanning movement (122) of the transmission laser beam (210),
- grouping subdetectors (142_{i,j}) whose positions correspond to the current position of the image point (230ₙ) to form a macro-pixel (160ₙ) assigned individually to the respective image point (230ₙ), and
- jointly evaluating the subdetectors (142_{i,j}) assigned to the respective macro-pixel (160ₙ),
wherein the signals, measured during a plurality of individual measurements for a specific macro-pixel (160ₙ) , of the subdetectors (142_{i,j}) assigned to the respective macro-pixel (160ₙ) in these individual measurements jointly are assigned to a histogram (170ₙ) assigned to the respective macro-pixel (160ₙ),
wherein the position of a macro-pixel (160ₙ) on the detection surface (141) is progressively adapted by regrouping corresponding subdetectors (142_{i,j}) in a manner following a displacement, caused by the scanning movement (122), of the image point (230ₙ) assigned to the respective macro-pixel (160ₙ) on the detection surface (141), wherein the speed of the regrouping of the subdetectors results directly from the speed of the scanning movement.

6. Method according to Claim 5,
wherein a plurality of scanning points (320ₙ, 320ₙⱼₐ₊₁) are captured simultaneously during an individual measurement,
wherein subdetectors (142_{i,j}) that are captured in the process by a first image point (230ₙ) formed on the detection surface (141) by a first scanning point (320ₙ) are assigned to a first macro-pixel (160ₙ) assigned individually to the first scanning point (320ₙ), and
wherein subdetectors (142_{i,j}) that are captured in the process by a second image point (230ₙ₊₁) formed on the detection surface (141) by a second scanning point (320ₙ₊₁) are assigned to a second macro-pixel (160ₙ₊₁) assigned individually to the second scanning point (320ₙ₊₁) .

7. Method according to either of Claims 5 to 6,
wherein subdetectors (142_{i,j}) that are captured by the first image point (230ₙ) during a first individual measurement and by the second image point (230ₙ₊₁) during a second individual measurement, which is effected by means of a second individual laser pulse chronologically directly succeeding the first individual laser pulse, are assigned to the first macro-pixel (160ₙ) during the first individual measurement and to the second macro-pixel (160ₙ₊₁) during the subsequent second individual measurement.

## Revendications

1. Système lidar multi-pulsé (100) destiné à détecter des objets (400) dans une zone d'observation (300), ledit système comprenant :
- un dispositif d'émission (110) comprenant au moins une source laser (111) destinée à générer un faisceau laser d'émission (210) à partir d'une séquence temporelle d'impulsions laser individuelles qui éclairent chacune une zone de détection (310ₙ) limitée à une partie de la zone d'observation (300) et qui effectuent un balayage en au moins un point de balayage (320ₙ),
- un dispositif de réception (140) comportant une surface de détection (141) et comprenant un ensemble de sous-détecteurs, en forme de ligne ou de matrice (152), qui comprend plusieurs sous-détecteurs (142_{i,j}) disposés côte à côte dans une première direction d'extension (144) et destinés à recevoir le faisceau laser (210), sous la forme d'un faisceau laser reçu (220), qui a été réfléchi et/ou diffusé par les objets (400) situés dans la zone d'observation (300) du système lidar multi-pulsé (100),
le dispositif de réception (130) étant conçu pour reproduire un point de balayage (320ₙ), détecté par le faisceau laser d'émission (210), sur la surface de détection (141) sous la forme d'un pixel (230ₙ),
- un dispositif de balayage (120) destiné à générer un mouvement de balayage (122) du faisceau laser d'émission (210) dans une direction de balayage (123) afin de balayer successivement toute la zone d'observation (300) le long d'une pluralité de points de balayage (320ₙ) qui se succèdent dans la direction de balayage (123),
le mouvement de balayage (122) du faisceau laser d'émission (210) étant conçu pour reproduire un pixel (230ₙ) sur la surface de détection (141) dans le cas d'impulsions laser individuelles qui se succèdent dans le temps et qui sont chacune déplacées le long de l'ensemble de sous-détecteur (143) en forme de ligne ou de matrice, et
- un dispositif de commande (130) destiné à déterminer des informations de distance des points de balayage (320ₙ) sur la base des temps de propagation des impulsions laser individuelles respectives,
le dispositif de commande (130) étant conçu pour combiner des sous-détecteurs (142_{i,j}), qui sont détectés par un pixel (230ₙ) actuellement reproduit sur la surface de détection (141), afin de former un macro-pixel (160ₙ) individuellement associé au pixel respectif (230ₙ) pour effectuer une évaluation conjointe,
**caractérisé en ce que**
le dispositif de commande (130) est également conçu pour associer des signaux, mesurés pour un macro-pixel déterminé (160ₙ) lors de plusieurs mesures individuelles, des sous-détecteurs (142_{i,j}) associés au macro-pixel respectif (160ₙ) dans ces mesures individuelles, conjointement à un histogramme (170ₙ) associé au macro-pixel respectif (160ₙ) et pour adapter ensuite la position d'un macro-pixel (160ₙ) sur la surface de détection (141), par recombinaison des sous-détecteurs correspondants (142_{i,j}), au déplacement, provoqué par le mouvement de balayage (122), du pixel (230ₙ), associé au macro-pixel respectif (160ₙ), sur la surface de détection (141), la vitesse de recombinaison des sous-détecteurs résultant directement de la vitesse du mouvement de balayage.

2. Système lidar multi-pulsé (100) selon la revendication 1,
le dispositif d'émission (110) étant conçu pour générer un faisceau laser d'émission (210) dont les impulsions laser individuelles éclairent chacune un angle solide (310ₙ) avec au moins deux points de balayage (320ₙ),
le dispositif de réception (140) étant conçu pour représenter les deux points de balayage (320ₙ) dans la zone de balayage (310) actuellement éclairée par le faisceau laser d'émission (210) sous la forme de deux points de balayage (230ₙ, 230ₙ₊₁) qui sont disposés l'un à côté de l'autre sur la surface de détection (141) et qui sont déplacés en raison du mouvement de balayage (122) le long de l'ensemble de sous-détecteurs (143) en forme de ligne ou de matrice, et
le dispositif de commande (130) étant conçu pour combiner des sous-détecteurs (142_{i,j}), qui sont actuellement détectés par un premier pixel (230ₙ) des deux pixels (230ₙ, 230ₙ₊₁), conjointement afin de former un premier macro-pixel (160ₙ) associé au premier pixel (230ₙ) et pour combiner des sous-détecteurs (142_{i,j}), qui sont actuellement détectés par un deuxième pixel (230ₙ₊₁) des deux pixels (230ₙ, 230ₙ₊₁), conjointement afin de former le deuxième macro-pixel (160ₙ₊₁) associé au deuxième pixel (230ₙ₊₁).

3. Système lidar multi-pulsé (100) selon la revendication 2,
le dispositif de commande (130) étant conçu pour associer des sous-détecteurs (142_{i,j}), qui sont détectés par le premier pixel (230ₙ) lors d'une première mesure individuelle effectuée au moyen d'une première impulsion laser individuelle et par le deuxième pixel (230ₙ₊₁) lors d'une deuxième mesure individuelle effectuée au moyen d'une deuxième impulsion laser individuelle suivant immédiatement dans le temps la première impulsion laser individuelle, au premier macro-pixel (160ₙ) lors de la première mesure individuelle et au deuxième macro-pixel (160ₙ₊₁) lors de la deuxième mesure individuelle suivante.

4. Système lidar multi-pulsé (100) selon l'une des revendications précédentes,
le dispositif d'émission (110) comprenant une pluralité de sources laser (111) dont les zones de détection (310) sont disposées les unes au-dessous des autres orthogonalement à la direction de balayage (123),
la surface de détection (141) pour chaque source laser (111) comprenant un ensemble de sous-détecteurs (143) individuellement associé à la source laser respective (111),
les ensembles de sous-détecteurs (143) étant disposés les uns au-dessous des autres orthogonalement à la direction de balayage (123).

5. Procédé de détection multidimensionnelle d'objets (400) dans une zone d'observation (300) à l'aide d'un système lidar multi-pulsé (100), ledit procédé comprenant les étapes suivantes :
- générer un faisceau laser d'émission (210) sous la forme d'une séquence temporelle d'impulsions laser individuelles, le faisceau laser d'émission (210) éclairant avec chaque impulsion laser individuelle une zone de détection (310) limitée à une portion de la zone d'observation (300) et effectuant un balayage en au moins un point de balayage (320ₙ),
- générer un mouvement de balayage (122) du faisceau laser d'émission (210) dans une direction de balayage (123), lequel provoque un balayage successif de toute la zone d'observation (300) en une pluralité de points de balayage (320ₙ) se succédant dans la direction de balayage (123),
- recevoir un faisceau laser de réception (220), généré par réflexion et/ou diffusion du faisceau laser d'émission (210) par des objets (400) situés dans la zone d'observation (300), sur une surface de détection (141) comprenant un ensemble de sous-détecteurs (143) en forme de ligne ou de matrice qui comprend plusieurs sous-détecteurs (142_{i,j}) disposés les uns à côté des autres dans une première direction d'extension (144),
un point de balayage (320ₙ), actuellement détecté par le faisceau laser d'émission (210), étant reproduit sur la surface de détection (141) sous la forme d'un pixel (230ₙ) déplacé en raison du mouvement de balayage (122) du faisceau laser d'émission (210) successivement le long de l'ensemble de sous-détecteur (143) en forme de ligne ou de matrice,
- combiner des sous-détecteurs (142_{i,j}), dont les positions correspondent à la position actuelle du pixel (230ₙ), afin de former un macro-pixel (160ₙ) associé individuellement au pixel respectif (230ₙ), et
- évaluer conjointement les sous-détecteurs (142_{i,j}) associés au macro-pixel respectif (160ₙ),
les signaux, mesurés pour un macro-pixel (160ₙ) lors de plusieurs mesures individuelles, des sous-détecteurs (142_{i,j}) associés au macro-pixel respectif (160ₙ) dans ces mesures individuelles étant associés conjointement à un histogramme (170ₙ) associé au macro-pixel respectif (160ₙ),
la position d'un macro-pixel (160ₙ) sur la surface de détection (141) étant adaptée, par recombinaison des sous-détecteurs correspondants (142_{i,j}), au déplacement, provoqué par le mouvement de balayage (122), du pixel (230ₙ), associé au macro-pixel respectif (160ₙ), sur la surface de détection (141), la vitesse de recombinaison des sous-détecteurs résultant directement de la vitesse du mouvement de balayage.

6. Procédé selon la revendication 5,
plusieurs points de balayage (320ₙ, 320ₙ₊₁) étant détectés lors d'une mesure individuelle,
des sous-détecteurs (142_{i,j}), qui sont détectés par un premier pixel (230ₙ) formé sur la surface de détection (141) par un premier point de balayage (320ₙ), étant associés à un premier macro-pixel (160ₙ) associé individuellement au premier point de balayage (320ₙ), et des sous-détecteurs (142_{i,j}), qui sont détectés par un deuxième pixel (230ₙ₊₁) formé sur la surface de détection (141) par un deuxième point de balayage (320ₙ₊₁), étant associés à un deuxième macro-pixel (160ₙ₊₁) associé individuellement au deuxième point de balayage (320ₙ₊₁).

7. Procédé selon l'une des revendications 5 à 6,
des sous-détecteurs (142_{i,j}), qui sont détectés par le premier pixel (230ₙ) lors d'une première mesure individuelle et par le deuxième pixel (230ₙ₊₁) lors d'une deuxième mesure individuelle effectuée au moyen d'une deuxième impulsion laser individuelle suivant immédiatement dans le temps la première impulsion laser individuelle, étant associés au premier macro-pixel (160ₙ) lors de la première mesure individuelle et au deuxième macro-pixel (160ₙ₊₁) lors de la deuxième mesure individuelle suivante.
